# EUROPÄISCHE PATENTSCHRIFT

(11) **EP 1 133 409 B1**
(45) Veröffentlichungstag und Bekanntmachung des Hinweises auf die Patenterteilung: **02.10.2002**
(21) Anmeldenummer: 99960929.0
(22) Anmeldetag: 18.11.1999
(51) Int. Cl.: B60N 2/44

(54) **BEIDSEITIG WIRKENDER MANUELLER ANTRIEB**
TWO-DIRECTIONAL MANUAL DRIVE
DISPOSITIF D'ENTRAINEMENT MANUEL A FONCTIONNEMENT DANS LES DEUX SENS

(30) Priorität: 24.11.1998 DE 19855285
(43) Veröffentlichungstag der Anmeldung: 19.09.2001
(73) Patentinhaber: Brose Fahrzeugteile GmbH & Co. KG Coburg, 96450 Coburg (DE)
(72) Erfinder: SCHUMANN, Peter, D-96253 Untersiemau (DE); SCHECK, Georg, D-96475 Weitramsdorf (DE)
(74) Vertreter: Ninnemann, Detlef, Dipl.-Ing.
(86) Internationale Anmeldenummer: DE9903676
(87) Internationale Veröffentlichungsnummer: WO00030890

(56) Entgegenhaltungen:
- WO-A-96/23672
- WO-A-97/40295
- DE-A- 3 608 858
- DE-A- 3 715 726
- DE-A- 4 309 334
- DE-A- 4 405 870
- DE-C- 3 704 954
- FR-A- 2 750 186
- US-A- 5 011 223

## Beschreibung

Die Erfindung betrifft einen beidseitig wirkenden manuellen Antrieb zur Erzeugung einer Drehbewegung nach dem Oberbegriff des Anspruchs 1. Ein derartiger Antrieb eignet sich insbesondere für eine manuelle Höhen- oder Neigungsverstellung eines Fahrzeugsitzes.

Aus der DE 43 09 334 A1 ist ein beidseitig wirkender Antrieb bekannt, bei dem eine Kraftübertragung von einem Antriebshebel auf eine anzutreibende Welle über Kraftschlußelemente erfolgt, die auf der Welle angeordnet sind. Bei einer von der Nullpunktlage des Antriebshebels weg gerichteten Bewegung des Antriebshebels verklemmen die Kraftschlußelemente mit der Welle und übertragen ein antriebseitig eingeleitetes Drehmoment auf die Welle.

Die Kraftschlußelemente weisen somit bei Eintritt in die Antriebsphase mit der Oberfläche der anzutreibenden Welle eine reibungsbedingte Selbsthemmung auf. Dadurch wird gewährleistet, daß sich das Reibmoment in Abhängigkeit zum Antriebsmoment selbst verstärkt, wodurch auch große Kräfte übertragbar sind Bei der Reversierbewegung des Antriebshebels in Richtung seiner Nullpunktlage ist die Selbsthemmung jedoch aufgehoben und das Reibmoment möglichst klein gehalten.

Die Steuerung der Bedingungen der Selbsthemmung wird von einem elastischen Schaltelement übernommen. Eine Schwenkbewegung des Antriebshebels über seine Nullpunktlage hinaus führt zur Spreizung des insbesondere als Drahtformfeder ausgeführten elastischen Schaltelements. Die dadurch hervorgerufene tangential wirkende Kraft verursacht im Rahmen des vorgesehenen Spiels der Antriebsvorrichtung Kipp- und Verspannvorgänge, so daß die Selbsthemmung wirksam und verstärkt werden kann.

Bei einer Rückkehr des Antriebshebels in die Nullpunktlage übt das eine Federende des elastischen Schaltelements über einen Bolzen auf die Kraftschlußelemente eine tangentiale Kraft aus, die in Schwenkrichtung des Antriebshebels wirkt und die Selbsthemmungseigenschaften aufhebt, so daß ein Verklemmen bzw. Zurückdrehen der Welle verhindert wird.

Aus der FR-A-2 750 186 ist ein beidseitig wirkender manueller Antrieb zur Erzeugung einer Drehbewegung gemäß dem Oberbegriff des Anspruchs 1 bekannt, die ausgehend von einer Nullpunktlage eines um eine Antriebsachae schwenkbaren Antriebshebels wahlweise in die eine oder andere Drehrichtung erfolgt. Dabei wird ein Abtriebselement nur dann gedreht, wenn sich der Antriebshebel aus der Nullpunktlage wegbewegt, während bei einer Bewegung des Antriebshebels in die Nullpunktlage das Abtriebselement nicht mitgenommen wird. Zur Erzeugung der Drehbewegung weist das Abtriebselement eine Innenverzahnung auf, die mit zwei auf einem festen Flansch montierten Verriegelungsklinken zusammenwirkt. Eine gezahnte, um einen mit dem Antriebshebel mit diametralem Spiel verbundenen Nocken verschwenkbare, segmentförmige Scheibe weist zwei Mitnahmesperrklinken auf, von denen bei einer Betätigung des Antriebshebels die der Drehrichtung des Antriebshebels entsprechende Mitnahmesperrklinke sowie die entsprechende Verriegelungsklinke mit der Innenverzahnung des Abtriebselements in Eingriff gebracht werden, während die andere Mitnahmesperrklinke und Verriegelungsklinke außer Eingriff mit der Innenverzahnung des Abtriebselements gehalten werden.

Der bekannte Antriebsmechanismus zur Erzeugung einer Drehbewegung verriegelt sich nach jeder Betätigung des Antriebshebels selbsttätig, so daß keine zusätzliche Sperrvorrichtung erforderlich ist, die ein abtriebsseitiges Drehmoment blockiert, ein antriebsseitiges, vom Antriebshebel ausgehendes Drehmoment aber zur anzutreibenden Vorrichtung überträgt. Bei einer Rückführung des Antriebshebels in die Nullpunktlage wird die Verzahnung der Mitnahmesperrklinken außer Eingriff mit der Innenverzahnung des Abtriebselements gebracht.

Aus der WO 96 23672 A ist ein beidseitig wirkender, manueller Antrieb zur Erzeugung einer Drehbewegung mittels eines ausgehend von einer Nullpunktlage winkelbegrenzt in die eine oder andere Drehrichtung schwenkbaren Antriebshebels bekannt, durch den eine Welle gedreht wird, wenn sich der Antriebshebel von seiner Nullpunktlage wegbewegt, während beim Schwenken des Antriebshebels in Richtung der Nullpunktlage die Welle nicht mitgenommen wird. Der auf einer Achse gelagerte Antriebshebel ist mit schwenkbaren Rastelementen versehen, während mit einer Verzahnung versehene Enden in die am Umfang eines Antriebsrades angeordnete Verzahnung eingreifen. Den Rastelementen ist eine Kulissenführung zugeordnet, die das jeweils unbelastete Rastelement aus der Verzahnung des Antriebsrades hebt. Weiterhin ist eine Sperrvorrichtung derart mit der Antriebswelle verbunden, daß ein abtriebsseitiges Drehmoment gesperrt wird, während ein antriebsseitiges Drehmoment übertragen wird.

Der vorliegenden Erfindung liegt die Aufgabenstellung zugrunde, einen beidseitig wirkenden manuellen Antrieb zur Erzeugung einer Drehbewegung zu schaffen, der eine stufenlose Übertragung eines Drehmoments von einem Antriebshebel zu einem Abtriebselement ermöglicht, spiel- und geräuachfrei arbeitet, und der einfach, d.h. ohne größere Toleranzanforderungen auch als Sperrkupplung bei weitestgehend übereinstimmendem Aufbau mit einem beidseitig wirkenden Antriebsmechanismus einsetzbar und daher kostengünstig herstellbar ist.

Diese Aufgabe wird erfindungsgemäß durch einen beidseitig wirkenden manuellen Antrieb mit den Merkmalen des Anspruchs 1 gelöst.

Erfindungsgemäß ist vorgesehen, daß ein Abtriebselement eine konzentrisch zu einer Antriebsachse angeordnete, zylinderförmige Antriebsfläche aufweist, an die sich bei Drehung eines Antriebshebels aus der Nullpunktlage Anlageflächen von Kopplungselementen kraftschlüssig anlegen. Auf diese Weise wird das Abtriebselement in Umfangsrichtung mitgeführt. Bei einer Rückführung des Antriebshebels in die Nullpunktlage wird die kraftschlüssige Anlage der Kopplungselemente aufgehoben, so daß das Abtriebselement bei der Rückführung des Antriebshebels in die Nullpunktlage nicht mitgenommen wird.

Bei der erfindungsgemäßen Lösung ist besonders von Vorteil, daß sie ohne federelastisches Schaltelement ausführbar ist. Auf diese Weise haben äußere Einflüsse, insbesondere Verschmutzungen oder ähnliches, einen weitaus geringeren bzw. gar keinen Einfluß mehr auf die Punktion des erfindungsgemäßen Antriebs, so daß eine ordnungsgemäße Funktion des erfindungsgemäßen Antriebs gewährleistet ist. Dies gilt auch bei dauernder und hoher Belastung des Antriebs,

Der erfindungsgemäße Antrieb weist vorzugsweise kreisabschnittsförmige Kopplungselemente auf, die mit Anlageflächen ihrer der zylinderförmigen Antriebsfläche des Abtriebselements gegenüberstehenden teilkreisförmigen Flächen an der zylinderförmigen Antriebsfläche anliegen. Bei diesem Ausführungsbeispiel ist von Vorteil, daß die Ausbildung der Anlageflächen der Kopplungselemente an die zylinderförmige Ausbildung der Antriebsfläche angepaßt ist, so daß ein besonders guter Kraftschluß zwischen den Anlageflächen der Kopplungselemente und der zylinderförmigen Antriebsfläche des Abtriebselements ermöglicht wird.

Bei einem bevorzugten Ausführungsbeispiel des erfindungsgemäßen Antriebs ist ein Antriebselement zwischen den Kopplungselementen angeordnet. Des weiteren sind Spreizflanken der Kopplungselemente in einem derartigen Abstand von der Antriebsachse angeordnet, daß eine im wesentlichen radial gerichtete Kraft den Kraftschluß zwischen den Kopplungselementen und der zylinderförmigen Antriebsfläche herstellt.

Bei Auslenkung des Antriebshebels aus seiner Nullpunktlage liegen daher die Anlageflächen der Kopplungselemente zur Übertragung eines antriebsseitigen Drehmoments kraftschlüssig an der zylinderförmigen Antriebsfläche des Abtriebselements an.

Bei einem weiteren bevorzugten Ausführungsbeispiel liegen die Anlageflächen der Kopplungselemente durch mindestens ein Federelement, beispielsweise eine Druck- oder eine Blattfeder, elastisch vorgespannt an der zylinderförmigen Antriebsfläche des Abtriebselements an. Das Federelement liegt dabei vorzugsweise in der Nähe zumindest einer der Anlageflächen an den Kopplungselementen an und drückt diese in Umfangsrichtung soweit auseinander, daß diese mit ihren jeweils zum Federelement hinsichtlich der Antriebsachse abgewandten Spreizflanken am Antriebselement anliegen. Bei diesem Ausführungsbeispiel ist von Vorteil, daß die Kopplungselemente spielfrei sowohl an der zylinderförmigen Antriebsfläche des Abtriebselements als auch am Antriebselement anliegen, so daß ein spielfreier Antrieb zur Verfügung gestellt wird.

In einer weiteren vorteilhaften Ausgestaltung der Erfindung -ist-das Federelement formschlüssig um mindestens eine abgewinkelte Klaue des Antriebselements gelegt und drückt die benachbarten Spreizflanken der Kopplungselemente auseinander. Dazu ist vorzugsweise eine W-Feder vorgesehen, deren Enden an einander zugewandten radialen Endanschlägen der Kopplungselemente anliegen und deren Mittenabschnitt um eine abgewinkelte Klaue des Antriebselements gelegt ist. Die Verwendung eines derartigen Federelements gewährleistet ein besonders sicheres und spielfreies Anliegen der zum Federelement abgewandten Spreizflanken an das Antriebselement bzw. der Kopplungselemente an der zylinderförmigen Antriebsfläche des Abtriebselements.

Ein weiteres bevorzugtes Ausführungsbeispiel weist zwei symmetrisch zur Antriebsachse angeordnete und gleichartig ausgebildete Kopplungselemente auf, zwischen denen das mit der Antriebsachse und dem Antriebshebel verbundene Antriebselement angeordnet ist. Das Antriebselement ist dabei als Antriebsflügel ausgebildet, der bei einer Auslenkung des Antriebshebels zur Übertragung eines antriebsseitigen Drehmoments derart an den einander zugewandten Spreizflanken der Kopplungselemente angreift, daß eine im wesentlichen radial gerichtete Kraft den Kraftschluß zwischen den Kopplungselementen und der zylinderförmigen Antriebsfläche des Abtriebselements herstellt. Die Anlageflächen der Kopplungselemente liegen demnach zur Übertragung eines antriebsseitigen Drehmoments kraftschlüssig an der zylinderförmigen Antriebsfläche des Abtriebselements an.

Bei diesem Ausführungsbeispiel ist von Vorteil, daß bedingt durch die symmetrische Anordnung und die gleichartig ausgebildeten Kopplungselemente die Anlageflächen der Kopplungse-lemente sich am Umfang der zylinderförmigen Antriebsfläche des Abtriebselements gleichmäßig verteilen, so daß bei Auslenkung des Antriebshebels ein besonders guter Kraftschluß zwischen den Kopplungselementen und der zylinderförmigen Antriebsfläche des Abtriebselements hergestellt wird.

Bei dem erfindungsgemäßen Antrieb ist des weiteren vorzugsweise ein Freischaltelement vorgesehen, das Freischaltklauen aufweist, die in Ausnehmungen der der Antriebsfläche gegenüberstehenden teilkreisförmigen Flächen der Kopplungselemente angeordnet sind. Des weiteren weist das Freischaltelement eine Federlasche auf, die mit einer Rückholfeder gekoppelt ist.

Die Rückholfeder und die Freischaltklauen des Freischaltelements bewirken nach der Auslenkung des Antriebshebels aus dessen Nullpunktlage eine Rückführung des Antriebshebels in dessen Nullpunktlage. Bei einem Loslassen des Antriebshebels bzw. bei einem Betätigen des Antriebshebels mit verminderter Kraft wird kein antriebsseitiges Drehmoment mehr eingeleitet bzw. das antriebsseitig eingeleitete Drehmoment wird reduziert. Aufgrund der fehlenden bzw. verminderten radial gerichteten Kraft wird die kraftschlüssige Anlage der Kopplungselemente an der zylinderförmigen Antriebsfläche des Abtriebselements aufgehoben bzw. reduziert.

Die Rückholfeder, die bei der Auslenkung des Antriebshebels gespannt wird, bewirkt nun mit ihrer Federkraft, daß die Freischaltklauen des Freischaltelements in Umfangsrichtung gegen die Anschlagsflächen der Ausnehmungen der Kopplungselemente drücken und die Kopplungselemente in Umfangsrichtung zurücknehmen. Die Federkraft ist dabei derart gewählt, daß das Drücken der Freischaltklauen auch einen reduzierten Kraftschluß zwischen den Kopplungselementen und der zylinderförmigen Antriebsfläche des Abtriebselements überwindet.

Aufgrund der Mitnahme der Kopplungselemente durch die Freischaltklauen des Freischaltelements wird auch das mit dem Antriebshebel verbundene Antriebselement mitgenommen, so daß auch der Antriebshebel in seine Nullpunktlage zurückgeführt wird. Hingegen wird das Abtriebselement nicht mit zurückgenommen, da die kraftschlüssige Anlage der Kopplungselemente an der zylinderförmigen Antriebsfläche des Abtriebselements aufgehoben oder derart reduziert ist, daß ein Drehmoment auf das Abtriebselement nicht übertragen wird.

Als Rückholfeder ist vorzugsweise eine schraubenförmige Feder mit zwei Enden vorgesehen, die an einem Gehäuseanschlag und an der Federlasche des Freischaltelements anliegen. Derartige Federn weisen eine ausreichend hohe Federkraft auf, um den Antriebshebel in seine Nullpunktlage zurückzuführen. Darüber hinaus sind derartige Federn leicht in den sich unmittelbar an den Antriebshebel anschließenden Bauraum integrierbar. Auf diese Weise wird die Komplexität des Antriebs erhöht und Platz eingespart.

Bei einer weiteren Ausgestaltung der Erfindung ist das Abtriebselement abtriebsseitig mit einer Sperrkupplung verbunden, die einerseits ein von der Abtriebsseite der Sperrkupplung eingeleitetes Drehmoment kraftschlüssig blockiert und andererseits ein vom Abtriebselement auf die Sperrkupplung übertragenes, antriebsseitig eingeleitetes Drehmoment zur Abtriebsseite überträgt. Bei der Verwendung einer derartigen Sperrkupplung ist von Vorteil, daß bei Auftreten äußerer Kräfte, insbesondere Crashkräfte, keine Verstellung des Antriebs erfolgt.

Die Sperrkupplung weist vorzugsweise ein Kupplungsgehäuse mit einer zylindrischen Bremsfläche auf. Des weiteren sind Bremsbacken im Kupplungsgehäuse angeordnet, die mit einem Teil ihrer Außenflächen an der zylindrischen Bremsfläche des Kupplungsgehäuses elastisch vorgespannt anliegen. Die Bremsbacken sind vorzugsweise gleichförmig zu den Kopplungselementen ausgebildet.

Darüber hinaus ist das Abtriebselement mit einem Mitnehmerrad der Sperrkupplung verbunden, das vorzugsweise zylindermantelförmig ausgebildete Mitnehmerklauen aufweist, die mit Drehwinkelspiel formschlüssig zwischen zwei im wesentlichen radialen Anschlagsflächen der Bremsbacken angeordnet sind. Die Abtriebsseite der Sperrkupplung weist darüber hinaus einen zwischen den einander zugewandten Spreizflanken der Bremsbacken angeordneten Abtriebsflügel auf.

Die Sperrkupplung ist demnach fast übereinstimmend zu dem oben beschriebenen Antrieb aufgebaut. Einzelne Bauteile, beispielsweise die Kopplungselemente bzw. die Bremsbacken, sind daher sowohl für den beschriebenen Antrieb als auch für die Sperrkupplung verwendbar, was die Herstellungskosten verringert.

Allerdings weist die Sperrkupplung im Gegensatz zu dem oben beschriebenen Antrieb eine andere Funktion auf. Bei Wirkung eines von der Abtriebsseite der Sperrkupplung eingeleiteten Drehmoments drückt der Abtriebsflügel die Außenflächen der Bremsbacken an die zylindrische Bremsfläche des Kupplungsgehäuses derart kraftschlüssig an, daß eine Drehmomentübertragung blockiert wird.

Bei einem vom Abtriebselement auf die Sperrkupplung übertragenen Drehmoment erfolgt keine solche Sperrwirkung. Vielmehr wirkt das Abtriebselement derart mit den Mitnehmerklauen, daß diese in Umfangsrichtung auf die radialen Anschlagflächen der Bremsbacken drücken und eine kraftschlüssige Anlage der Bremsbacken an der zylindrischen Bremsfläche aufheben bzw. reduzieren, so daß die Mitnehmerklauen bei der Drehbewegung die Bremsbacken und somit auch den Abtriebsflügel mitnehmen. Auf diese Weise wird ein durch den Antriebshebel antriebsseitig eingeleitetes Drehmoment auf die Abtriebsseite übertragen.

Die Erfindung wird nachfolgend unter Bezugnahme auf die Figuren der Zeichnung an zwei Ausführungsbeispielen im einzelnen erläutert. Es zeigen:
- Fig. 1 -: eine Schnittansicht eines erfindungsgemäßen Antriebs; und
- Fig. 2 -: eine Schnittansicht des erfindungsgemäßen Antriebs mit einer Sperrkupplung.

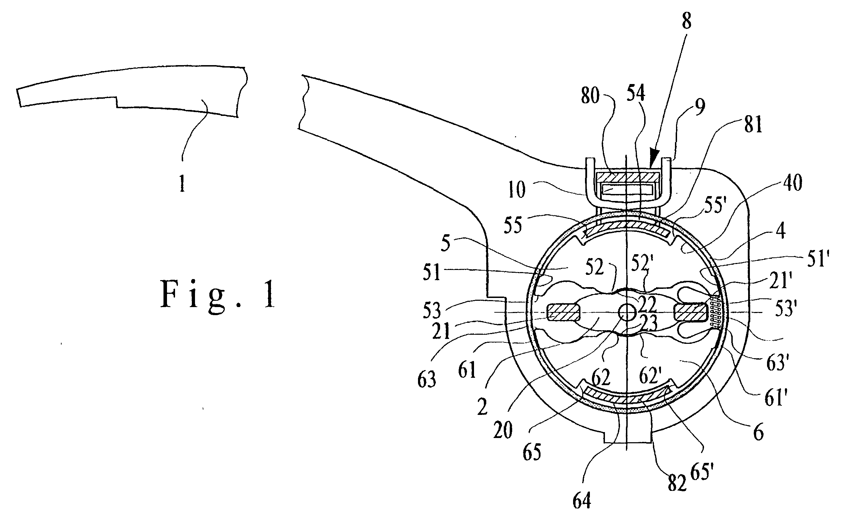

In der Figur 1 ist der grundlegende Aufbau eines erfindungsgemäßen beidseitig wirkenden, manuellen Antriebs dargestellt, der insbesondere für eine manuelle Höhen- oder Neigungsverstellung eines Fahrzeugsitzes geeignet ist. Im fol-genden wird zunächst auf den Aufbau des erfindungsgemäßen Antriebs und danach auf das funktionale Zusammenwirken der einzelnen Elemente des Antriebs eingegangen.

Der erfindungsgemäße Antrieb weist einen auf einer Antriebsachse 20 gelagerten Antriebshebel 1, ein mit dem Antriebshebel 1 verbundenes Antriebselement 2 sowie ein Abtriebselement 4 auf, dessen zylinderförmige Antriebsfläche 40 konzentrisch zur Antriebsachse 20 angeordnet ist.

Das Antriebselement 2, das als Antriebsflügel ausgebildet ist und zwei diametral angeordnete, abgewinkelte Klauen 21 und 21' aufweist, ist zwischen zwei symmetrisch zur Längsachse des Antriebselements 2 angeordneten und gleichartig ausgebildeten Kopplungselementen 5 und 6 angeordnet. Die Kopplungselemente 5 und 6 sind im wesentlichen kreisabschnittsförmig ausgebildet. Jedes der beiden Kopplungselemente 5 und 6 weist ein Paar Spreiznocken 52 und 52' bzw. 62 und 62' auf, die im Zusammenwirken mit dem Antriebselement 2 eine im wesentlichen radial gerichtete Kraft erzeugen, wodurch die Anlageflächen 51, 51' bzw. 61, 61' der Kopplungselemente 5, 6 mit dem Abtriebselement 4 reibschlüssig verbunden werden.

Zusätzlich zu den Anlageflächen 51 und 51' bzw. 61 und 61' sind an den beiden Enden der Kopplungselemente 5 und 6 radiale Endanschläge 53 und 53' bzw. 63 und 63' angeordnet. Dabei liegen sich jeweils die beiden radialen Endanschläge 53 und 63 sowie 53' und 63' der Kopplungselemente 5 und 6 gegenüber.

Zwischen den beiden benachbarten radialen Endanschlägen 53' und 63' der Kopplungselemente 5 und 6 ist eine W-Feder 7 angeordnet, deren Enden an den radialen Endanschlägen 53' und 63' anliegen sowie deren Mittenabschnitt um die in der Nähe der Endanschläge 53' und 63' angeordnete, abgewinkelte Klaue 21' des Antriebselements 2 formschlüssig gelegt ist.

Aufgrund der W-Feder 7 sind die Kopplungselemente 5 und 6 derart elastisch vorgespannt, daß die Anlageflächen 51, 51', 61 und 61' der Kopplungselemente 5 und 6 an der zylinderförmigen Antriebsfläche 40 des Abtriebselements 4 spielfrei anliegen. Darüber hinaus drückt die W-Feder 7 derart auf die beiden Endanschläge 53' und 63' der Kopplungselemente 5 und 6, daß die beiden benachbarten Spreizflanken 52' und 62' der Kopplungselemente 5 und 6 auseinandergedrückt werden. Hingegen werden die beiden zur W-Feder 7 abgewandten, benachbarten Spreizflanken 52 und 62 der Kopplungselemente 5 und 6 durch die W-Feder 7 derart gegen das Antriebselement 2 gedrückt, daß diese dort spielfrei anliegen.

Besonders von Vorteil ist hier, daß durch die spielfreie Anlage der Kopplungselemente 5 und 6 sowohl an der zylinderförmigen Antriebsfläche 40 des Abtriebselements 4 als auch an dem Antriebselement 2 ein spielfreier Antrieb zur Verfügung gestellt wird.

Die beiden Kopplungselemente 5 und 6 weisen an den der zylinderförmigen Antriebsfläche 40 des Abtriebselements 4 gegenüberstehenden teilkreisförmigen Flächen Ausnehmungen 54 und 64 auf, in denen Freischaltklauen 81 und 82 eines Freischaltelements 8 angeordnet sind. Die Freischaltklauen 81 und 82 drücken in Umfangsrichtung gegen Anschlagsflächen 55 und 55' bzw. 65 und 65' der Ausnehmungen 54 und 64. Das Freischaltelement 8 weist darüber hinaus eine Federlasche 80 auf, die mit einer Rückholfeder 9 gekoppelt ist.

Als Rückholfeder 9 wird bei diesem Ausführungsbeispiel eine schraubenförmige Feder verwendet. Die Verwendung einer anderen geeigneten Feder als Rückholfeder ist aber ebenfalls möglich. Die hier verwendete schraubenförmige Rückholfeder 9 weist zwei freie Enden auf, die beide am gehäusefesten Anschlag 10 oder an der Federlasche 80 des Freischaltelements 8 unter Verspannung anliegen.

Nachfolgend wird nun die Funktion des beschriebenen erfindungsgemäßen Antriebs näher erläutert.

Bei der Auslenkung des Antriebshebels 1 über dessen Nullpunktlage hinaus wird ein antriebsseitiges Drehmoment in den Antrieb eingeleitet. Aufgrund dessen greift das mit dem Antriebshebel 1 verbundene Antriebselement 2 derart an den einander zugewandten Spreizflanken 52 und 62 an, daß eine im wesentlichen radial gerichtete Kraft einen Kraftschluß zwischen den Kopplungselementen 5 und 6 und der zylinderförmigen Antriebsfläche 40 des Abtriebselements 4 herstellt. Die Anlageflächen 51, 51', 61 und 61' der Kopplungselemente 5 und 6 liegen hierdurch zur Übertragung des antriebsseitigen Drehmoments kraftschlüssig an der zylinderförmigen Antriebsfläche 40 des Abtriebselements 4 an. Dabei wird durch das Antriebselement 2 je nach Drehrichtung jeweils nur eines der beiden Kopplungselemente 5 bzw. 6 belastet.

Aufgrund des Kraftschlusses wird das Abtriebselement 4 von den Kopplungselementen 5 und 6 bei Drehung des Antriebshebels 1 mitgeführt, so daß das antriebsseitig eingeleitete Drehmoment auf die Abtriebsseite übertragen wird.

Bei der Auslenkung des Antriebshebels 1 über dessen Nullpunktlage hinaus wird auch das Freischaltelement 8 und das mit der Federlasche 80 des Freischaltelements 8 gekoppelte Ende der Rückholfeder 9 ausgelenkt, so daß die Rückholfeder 9 gespannt wird.

Bei einem Loslassen des Antriebshebels 1 wird kein antriebsseitiges Drehmoment mehr in den Antrieb eingeleitet. Das Antriebselement 2 greift daher nicht mehr an den Spreizflanken 52 und 62 an, so daß aufgrund der fehlenden radial gerichteten Kraft die kraftschlüssige Anlage der Kopplungselemente 5 und 6 an der zylinderförmigen Antriebsfläche 40 des Abtriebselements 4 aufgehoben wird.

Aufgrund der zur Verfügung gestellten Federkraft der Rückholfeder 9 drücken nun die Freischaltklauen 81 und 82 des Freischaltelements 8 in Umfangsrichtung gegen die Anschlagsflächen 55 und 65' bzw. 55' und 65 der Kopplungselemente 5 und 6 und nehmen diese in Umfangsrichtung mit zurück. Hierdurch wird auch das Antriebselement 2 und somit auch der Antriebshebel 1 mitgenommen, bis dieser seine Nullpunktlage erreicht hat. Hingegen wird bei der Zurücknahme der Kopplungselemente 5 und 6 das Abtriebselement 4 nicht mitgenommen, da die kraftschlüssige Anlage der Kopplungselemente 5 und 6 an-der zylinderförmigen Antriebsfläche 40 des Abtriebselements 4 aufgrund der fehlenden radial gerichteten Kraft aufgehoben ist.

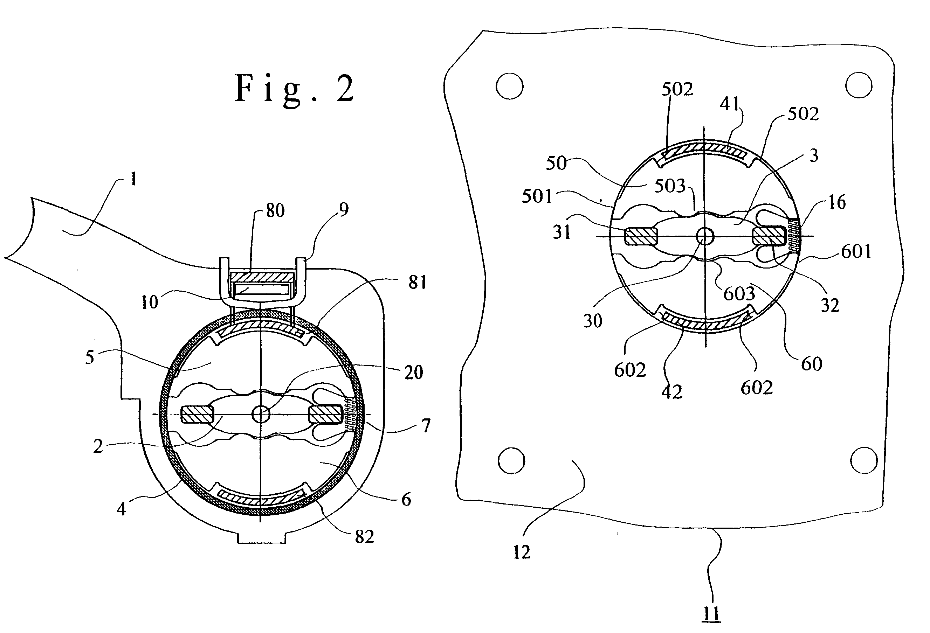

Figur 2 zeigt ein weiteres Ausführungsbeispiel des erfindungsgemäßen Antriebs. Der grundlegende Aufbau dieses Antriebs unterscheidet sich vom Aufbau des Antriebs gemäß Figur 1 nur durch eine am Antrieb angeordnete Sperrkupplung 11. Es wird nachfolgend daher nur auf den Aufbau und die Funktion der Sperrkupplung 11 eingegangen. Hinsichtlich des Aufbaus bzw. der Funktion des Antriebs wird auf die obengemachten Äußerungen verwiesen.

Die abtriebsseitig angeordnete Sperrkupplung 11 weist ein Kupplungsgehäuse 12 mit einer zylindrischen Bremsfläche auf. Des weiteren sind im Kupplungsgehäuse 12 zwei symmetrisch zur Abtriebsachse 30 angeordnete und gleichartig ausgebildete Bremsbacken 50 und 60 angeordnet. Die Ausbildung der Bremsbacken 50 und 60 entspricht dabei der Ausbildung der Kopplungselemente 5 und 6 des Antriebs.

Zwischen den beiden Bremsbacken 50 und 60 ist ein Abtriebsflügel 3 angeordnet, an dessen Enden abgewinkelte Klauen 31 und 32 angeordnet sind. Um die abgewinkelte Klaue 32 ist formschlüssig der Mittenabschnitt einer W-Feder 16 gelegt, deren Enden an einander zugewandten radialen Endanschlägen der Bremsbacken 50 und 60 anliegen. Durch die elastische Vorspannung der Bremsbacken 50 und 60 liegen die Anlageflächen 501 und 601 der Bremsbacken 50 und 60 spielfrei an der zylindrischen Bremsfläche des Kupplungsgehäuses 12 an. Darüber hinaus werden die Bremsbacken 50 und 60 in Umfangs-rrchtung derart -auseinander gedrückt, daß diese mit Ihren einander zugewandten Spreizflanken 503 und 603 spielfrei an der Außenfläche des Abtriebsflügels 3 anliegen.

Das Abtriebselement 4 ist mit einem Mitnehmerrad der Sperrkupplung 11 verbunden, das zylindermantelförmig ausgebildete Mitnehmerklauen 41 und 42 aufweist. Diese Mitnehmerklauen 41 und 42 sind mit Drehwinkelspiel formschlüssig zwischen zwei radialen Anschlagsflächen 502 und 602 von Ausnehmungen der Bremsbacken 50 und 60 angeordnet.

Die hier beschriebene Sperrkupplung 11 des erfindungsgemäßen Antriebs dient dazu, um einerseits ein von der Abtriebsseite der Sperrkupplung 11 eingeleitetes Drehmoment kraftschlüssig zu blockieren und andererseits ein vom Abtriebselement 4 auf die Sperrkupplung 11 übertragenes, antriebsseitig eingeleitetes Drehmoment auf den Abtriebsflügel 3 zu übertragen.

Bei Wirkung eines von der Abtriebsseite der Sperrkupplung 11 eingeleiteten Drehmoments drückt der Abtriebsflügel 3 die Außenflächen 501 und 601 der Bremsbacken 50 und 60 an die zylindrische Bremsfläche des Kupplungsgehäuses 12 kraftschlüssig an. Hierdurch wird eine Übertragung des abtriebsseitig eingeleiteten Drehmoments blockiert. Insbesondere wird verhindert, daß bei Auftreten äußerer Kräfte, insbesondere Crashkräfte, eine Verstellung des Antriebs erfolgt.

Wird ein antriebsseitig eingeleitetes Drehmoment vom Abtriebselement 4 auf die Sperrkupplung 11 übertragen, so erfolgt keine derartige Sperrwirkung. Bei dieser Übertragung werden aufgrund der Verbindung des Abtriebselements 4 mit den Mitnehmerklauen 41 und 42 diese in Umfangsrichtung an die radialen Anschlagsflächen 502 und 602 der Bremsbakken 50 und 60 gedrückt. Eine vorhandene kraftschlüssige Anlage der Anlageflächen 501 und 601 der Bremsbacken 50 und 60 an der zylindrischen Bremsfläche des Kupplungsgehäuses 12 wird dabei aufgehoben oder zumindest derart reduziert, daß die Bremsbacken 50 und 60 durch die Mitnehmerklauen 41 und 42 in Umfangsrichtung mitgenommen werden. Auf diese Weise wird auch der Abtriebsflügel 3 mitgenommen.

## Patentansprüche

1. Beidseitig wirkender manueller Antrieb zur Erzeugung einer Drehbewegung, die ausgehend von einer Nullpunktlage eines um eine Antriebsachse (20) schwenkbaren Antriebshebels (1) wahlweise in die eine oder andere Drehrichtung erfolgt, wobei ein Abtriebselement (4) mit einer konzentrisch zur Antriebsachse (20) angeordneten, zylinderförmigen Antriebsfläche (40) nur dann gedreht wird, wenn sich der Antriebshebel (1) aus der Nullpunktlage wegbewegt, während bei einer Bewegung des Antriebshebels (1) in die Nullpunktlage das Abtriebselement (4) nicht mitgenommen wird, mit zwischen dem Antriebshebel (1) und dem Abtriebselement (4) angeordneten Kopplungselementen (5, 6), die ein antriebsseitiges Drehmoment auf das Abtriebselement (4) übertragen, insbesondere für eine manuelle Verstellung eines Fahrzeugsitzes,
**dadurch gekennzeichnet,**
**daß** das Antriebselement (2) zwischen Spreizflanken (52, 52'; 62, 62') der Kopplungselemente (5, 6) angeordnet ist und daß die Spreizflanken (52, 52'; 62, 62') in einem derartigen Abstand von der Antriebsachse (20) angeordnet sind, daß eine im wesentlichen radial gerichtete Kraft einen Kraftschluß zwischen den Kopplungselementen (5, 6) und der Antriebsfläche (40) des Abtriebselements (4) herstellt, so daß sich bei Drehung des Antriebshebels (1) aus der Nullpunktlage Anlageflächen (51, 51'; 61, 61') der Kopplungselemente (5; 6) zur Übertragung eines antriebsseitigen Drehmoments kraftschlüssig an die Antriebsfläche (40) des Abtriebselements (4) anlegen und das Abtriebselement (4) in Umfangsrichtung mitführen, während bei einer Rückführung des Antriebshebels (1) in die Nullpunktlage die kraftschlüssige Anlage der Anlageflächen (51, 51'; 61, 61') der Kopplungselemente (5, 6) an der zylinderförmigen Antriebsfläche (40) aufgehoben wird.

2. Beidseitig wirkender Antrieb nach Anspruch 1, **gekennzeichnet durch** kreisabschnittsförmige Kopplungselemente (5; 6), die mit Anlageflächen (51, 51'; 61, 61') ihrer der zylinderförmigen Antriebsfläche (40) gegenüberstehenden teilkreisförmigen Flächen an der zylinderförmigen Antriebsfläche (40) anliegen.

3. Beidseitig wirkender Antrieb nach Anspruch 1 oder 2, **dadurch gekennzeichnet, daß** die Anlageflächen (51, 51'; 61, 61') der Kopplungselemente (5; 6) durch mindestens ein Federelement (7) elastisch vorgespannt an der zylinderförmigen Antriebsfläche (40) des Abtriebselements (4) anliegen.

4. Beidseitig wirkender Antrieb nach Anspruch 3, **dadurch gekennzeichnet, daß** das Federelement (7) in der Nähe zumindest einer der Anlageflächen (51, 51'; 61, 61') der Kopplungselemente (5; 6) an den Kopplungselementen (5; 6) anliegt und diese in Umfangsrichtung soweit auseinanderdrückt, daß diese mit ihren jeweils abgewandten Spreizflanken (52, 62 bzw. 52', 62') am Antriebselement (2) anliegen.

5. Beidseitig wirkender Antrieb nach Anspruch 3 oder 4, **dadurch gekennzeichnet, daß** das Federelement (7) formschlüssig um mindestens eine abgewinkelte Klaue (21, 21') des Antriebselements (2) gelegt ist und die benachbarten Spreizflanken (52, 62 bzw. 52', 62') der Kopplungselemente (5; 6) auseinanderdrückt.

6. Beidseitig wirkender Antrieb nach einem der Ansprüche 3 bis 5, **dadurch gekennzeichnet, daß** das Federelement (7) aus einer W-Feder besteht, deren Enden an einander zugewandten radialen Endanschlägen (53, 53'; 63, 63') der Kopplungselemente (5; 6) anliegen und deren Mittenabschnitt um die abgewinkelten Klauen (21, 21') des Antriebselements (2) gelegt ist.

7. Beidseitig wirkender Antrieb nach mindestens einem der vorangehenden Ansprüche, **gekennzeichnet durch** zwei symmetrisch zur Antriebsachse (20) angeordnete und gleichartig ausgebildete Kopplungselemente (5; 6), zwischen denen das mit der Antriebsachse (20) und dem Antriebshebel (1) verbundene, als Antriebsflügel ausgebildete Antriebselement (2) angeordnet ist, der zur Übertragung eines antriebsseitigen Drehmoments derart an den einander zugewandten Spreizflanken (52, 52'; 62, 62') der Kopplungselemente (5; 6) angreift, daß eine im wesentlichen radial gerichtete Kraft den Kraftschluß zwischen den Kopplungselementen (5, 6) und der Antriebsfläche (40) herstellt, so daß die Anlageflächen (51, 51'; 61, 61') der Kopplungselemente (5; 6) zur Übertragung eines antriebsseitigen Drehmoments kraftschlüssig an der Antriebsfläche (40) des Abtriebselements (4) anliegen.

8. Beidseitig wirkender Antrieb nach Anspruch 7, **dadurch gekennzeichnet, daß** in Ausnehmungen (54, 64) der der Antriebsfläche (40) gegenüberstehenden teilkreisförmigen Flächen der Kopplungselemente (5; 6) Freischaltklauen (81, 82) eines Freischaltelements (8) angeordnet sind, das eine mit einer Rückholfeder (9) gekoppelte Federlasche (80) aufweist, und daß die Freischaltklauen (81, 82) in Umfangsrichtung gegen Anschlagflächen (55, 55'; 65, 65') der Ausnehmungen (54, 64) der Kopplungselemente (5; 6) drücken und die Kopplungselemente (5; 6) in Umfangsrichtung zurücknehmen, bis der Antriebshebel (1) seine Nullpunktlage erreicht hat.

9. Beidseitig wirkender Antrieb nach Anspruch 8< **dadurch gekennzeichnet, daß** die Rückholfeder (9) als schraubenförmige Feder mit zwei freien Enden ausgebildet ist, die an einem Gehäuseanschlag (10) und an der Federlasche (80) des Freischaltelements (8) anliegen.

10. Beidseitig wirkender Antrieb nach mindestens einem der vorangehenden Ansprüche; **dadurch gekennzeichnet, daß** das Abtriebselement (4) abtriebsseitig mit einer Sperrkupplung (11) verbunden ist, die einerseits ein von der Abtriebsseite der Sperrkupplung (11) eingeleitetes Drehmoment kraftschlüssig blockiert und andererseits ein vom Abtriebselement (4) auf die Sperrkupplung (11) übertragenes Drehmoment zur Abtriebsseite überträgt.

11. Beidseitig wirkender Antrieb nach Anspruch 10, **dadurch gekennzeichnet, daß** die Sperrkupplung (11) ein Kupplungsgehäuse (12) mit einer zylindrischen Bremsfläche und darin angeordneten Bremsbacken (50; 60) aufweist, die mit einem Teil ihrer Außenflächen (501; 601) an der zylindrischen Bremsfläche des Kupplungsgehäuses (12) elastisch vorgespannt anliegen, daß das Abtriebselement (4) mit einem Mitnehmerrad mit vorzugsweise zylindermantelförmig ausgebildeten Mitnehmerklauen (41, 42) verbunden ist, die mit Drehwinkelspiel formschlüssig zwischen zwei im wesentlichen radialen Anschlagflächen (502; 602) der Bremsbacken (50; 60) angeordnet sind, und daß die Abtriebsseite (3, 30) der Sperrkupplung (11) einen zwischen den einander zugewandten Spreizflanken (503; 603) der Bremsbacken (50; 60) angeordneten Abtriebsflügel (3) aufweist,

12. Beidseitig wirkender Antrieb nach Anspruch 11, **dadurch gekennzeichnet, daß** die Kopplungselemente (5; 6) und die Bremsbacken (50; 60) gleichförmig ausgebildet sind.

## Claims

1. Two-directional manual drive which produces a rotational movement, starting from the neutral position of a drive lever (1) which can pivot around a drive axis (20) whereby the rotational movement can occur in a selective manner in one of two rotational directions, whereby a driven element (4) having a cylindrical driving surface (40) arranged concentric with the drive axis (20) is only then rotated when the drive lever (1) is moved away from the neutral position whilst when the drive lever (1) is moved into the neutral position the driven element (4) is not displaced, with coupling elements (5, 6) which are mounted between the drive lever (1) and the driven element (4) and transfer torque on the drive side to the driven element (4), more particularly for manually adjusting a vehicle seat,
**characterised in that**
the drive element (2) is mounted between spaced flanks (52, 52'; 62, 62') of the coupling elements (5; 6) and that the spaced flanks (52, 52'; 62, 62') are arranged at such a distance from the drive axis (20) that a substantially radially aligned force produces the friction engagement between the coupling elements (5, 6) and the driving surface (40) of the driven element (4) so that when the drive lever (1) is rotated out of a neutral position, bearing surfaces (51, 51'; 61, 61') of the coupling elements (5, 6) for transferring torque on the drive side are placed with frictional engagement against the driving surface (40) of the driven element (4) and the driven element (4) is moved in the direction of the periphery whilst when the drive lever (1) is returned to the neutral position the bearing surfaces (51, 51'; 61, 61') of the coupling elements (5, 6) are released from a position of frictional engagement with respect to the cylindrical driving surface (40).

2. Two-directional drive according to claim 1 **characterised by** circular section shaped coupling elements (5; 6) which bear against the cylindrical driving surface (40) with bearing surfaces (51, 51'; 61, 61') of their partial circular shaped surfaces opposite the cylindrical driving surface (40).

3. Two-directional drive according to claim 1 or 2 **characterised in that** the bearing surfaces (51, 51'; 61, 61') of the coupling elements (5; 6) are elastically pretensioned by at least one spring element (7) against the cylindrical driving surface (40) of the driven element (4).

4. Two-directional drive according to claim 3 **characterised in that** the spring element (7) bears against the coupling elements (5; 6) in the vicinity of at least one of the bearing surfaces (51, 51'; 61, 61') of the coupling elements (5' 6) and presses these so far apart in the direction of the periphery that these each abut the drive element (2) with their oppositely facing expanding flanks (52, 62 and 52', 62' respectively).

5. Two-directional drive according to claim 3 or 4 **characterised in that** the spring element (7) is placed with positive locking engagement about at least one angled claw (21, 21') of the drive element (2) and presses apart the adjoining expanding flanks (52, 62 and 52', 62') of the coupling elements (5, 6).

6. Two-directional drive according to at least one of the claims 3 to 5 **characterised in that** the spring element (7) consists of a W-spring whose ends bear against facing radial end stops (53, 53'; 63, 63') of the coupling elements (5, 6) and whose centre section is placed around the angled claws (21, 21') of the drive element (2).

7. Two-directional drive according to at least one of the preceding claims **characterised by** two coupling elements (5; 6) of identical design mounted symmetrical relative to the drive axis (20), wherein the drive element (2) formed as a drive vane and connected to the drive axis (20) and the drive lever (1) is mounted between the coupling elements and for transferring torque on the drive side engages on the facing expanding flanks (52, 52'; 62, 62') of the coupling elements (5;6) so that a substantially radially aligned force produces the frictional engagement between the coupling elements (5, 6) and the driving surface (40) so that the bearing faces (51, 51'; 61, 61') of the coupling elements (5;6) for transferring torque on the drive side bear with frictional engagement against the driving surface (40) of the driven element (4).

8. Two-directional drive according to claim 7 **characterised in that** releasing claws (81, 82) of a releasing element (8) which has a spring tongue (80) coupled to a restoring spring (9) are mounted in recesses (54, 64) of the partial circular shaped surfaces of the coupling elements (5; 6) opposite the driving surface (40), and that the releasing claws (81, 82) press in the direction of the periphery against stop faces (55, 55'; 65, 65') of the recesses (54, 64) of the coupling elements (5; 6) and draw the coupling elements (5; 6) back in the direction of the periphery until the drive lever (1) has reached its neutral position.

9. Two-directional drive according to claim 8 **characterised in that** the rstoring spring (9) is formed as a coil spring with two free ends which are placed against a housing stop (10) and the spring shackle (80) of the releasing elements.

10. Two-directional drive according to at least one of the preceding claims, **characterised in that** the driven element (4) is connected on the driven side to a locking clutch (11) which on the one hand blocks with frictional engagement torque introduced from the driven side of the locking clutch (11) and on the other side transfers torque transferred from the driven element (4) to the locking clutch (11) to the driven side.

11. Two-directional drive according to claim 10 **characterised in that** the locking clutch (11) has a clutch housing (12) with a cylindrical brake surface and brake shoes (50; 60) mounted therein which with a part of their outside faces (501; 601) are placed elastically pretensioned on the cylindrical brake surface of the clutch housing (12), that the driven element (4) is connected to a follower wheel with preferably cylindrical sleeve shaped follower claws (41, 42) which are mounted with rotational angular play in keyed engagement between two substantially radial stop faces (502; 602) of the brake shoes (50; 60) and that the driven side (3, 30) of the locking clutch (11) has a driven vane (3) which is mounted between the facing expanding flanks (503; 603).

12. Two-directional drive according to claim 12 **characterised in that** the coupling elements (5; 6) and the brake shoes (50; 60) are formed identical.

## Revendications

1. Dispositif d'entraînement manuel à fonctionnement dans les deux sens pour générer un mouvement de rotation, qui s'effectue à partir d'une position zéro, d'un levier d'entraînement (1) mobile en basculement autour d'un axe d'entraînement (20) au choix dans une direction de rotation ou dans l'autre, dans lequel un élément mené (4) comportant une surface d'entraînement cylindrique (40) agencée concentriquement à l'axe d'entraînement (20) n'est tourné que lorsque le levier d'entraînement (1) se déplace hors de la position zéro, tandis que lors d'un mouvement du levier d'entraînement (1) vers la position zéro, l'élément mené (4) n'est pas entraîné, comportant des éléments d'accouplement (5, 6) agencés entre le levier d'entraînement (1) et l'élément mené (4), qui transmettent un couple de rotation côté entraînement sur l'élément mené (4), en particulier pour un réglage manuel d'un siège de véhicule,
**caractérisé en ce que**
l'élément menant (2) est agencé entre des flancs d'écartement (52, 52' ; 62, 62') des éléments d'accouplement (5, 6), et **en ce que** les flancs d'écartement (52, 52' ; 62, 62') sont agencés à une distance de l'axe d'entraînement (20) telle qu'une force dirigée sensiblement radialement établit une coopération de forces entre les éléments d'accouplement (5, 6) et la surface d'entraînement (40) de l'élément mené (4), de sorte que lors d'une rotation du levier d'entraînement (1) à partir de la position zéro, des surfaces d'appui (51, 51' ; 61, 61') des éléments d'accouplement (5 ; 6) s'appuient par coopération de forces contre la surface d'entraînement (40) de l'élément mené (4) pour transmettre un couple de rotation côté entraînement et entraînent l'élément mené (4) en direction périphérique, tandis que lors d'un retour du levier d'entraînement (1) vers la position zéro, l'appui en coopération de forces des surfaces d'appui (51, 51' ; 61, 61') des éléments d'accouplement (5, 6) contre la surface d'entraînement cylindrique (40) est annulé.

2. Dispositif d'entraînement à fonctionnement dans les deux sens selon la revendication 1, **caractérisé par** des éléments d'accouplement (5 ; 6) en forme de segments de cercle, qui s'appuient par des surfaces d'appui (51, 51' ; 61, 61') de leurs surfaces en forme de cercle partiel opposées à la surface d'entraînement cylindrique (40) contre la surface d'entraînement cylindrique (40).

3. Dispositif d'entraînement à fonctionnement dans les deux sens selon l'une ou l'autre des revendications 1 et 2, **caractérisé en ce que** les surfaces d'appui (51, 51' ; 61, 61') des éléments d'accouplement (5 ; 6) s'appuient sous précontrainte élastique par au moins un élément élastique (7) contre la surface d'entraînement cylindrique (40) de l'élément mené (4).

4. Dispositif d'entraînement à fonctionnement dans les deux sens selon la revendication 3, **caractérisé en ce que** l'élément élastique (7) s'appuie à proximité de l'une au moins des surfaces d'appui (51, 51' ; 61, 61') des éléments d'accouplement (5 ; 6) contre les éléments d'accouplement (5 ; 6) et les écarte en direction périphérique aussi loin que ceux-ci s'appuient par leurs flancs d'écartement respectifs détournés (52, 62 ou 52', 62') contre l'élément menant (2).

5. Dispositif d'entraînement à fonctionnement dans les deux sens selon l'une ou l'autre des revendications 3 et 4, **caractérisé en ce que** l'élément élastique (7) est posé en coopération de formes autour d'au moins une griffe coudée (21, 21') de l'élément menant (2) et écarte les flancs d'écartement voisins (52, 62 ou 52', 62') des éléments d'accouplement (5 ; 6).

6. Dispositif d'entraînement à fonctionnement dans les deux sens selon l'une des revendications 3 à 5, **caractérisé en ce que** l'élément élastique (7) est constitué par un ressort en W dont les extrémités s'appuient contre des butées d'extrémité radiales tournées l'une vers l'autre (53, 53'; 63, 63') des éléments d'accouplement (5 ; 6), et son tronçon médian est posé autour des griffes coudées (21, 21') de l'élément menant (2).

7. Dispositif d'entraînement à fonctionnement dans les deux sens selon l'une au moins des revendications précédentes, **caractérisé par** deux éléments d'accouplement (5 ; 6) agencés à symétrie par rapport à l'axe d'entraînement (20) et réalisés identiques, entre lesquels est agencé l'élément menant (2) relié à l'axe d'entraînement (20) et au levier d'entraînement (1) et réalisé sous forme d'ailette d'entraînement qui attaque les flancs d'écartement (52, 52' ; 62, 62') tournés l'un vers l'autre des éléments d'accouplement (5 ; 6) pour transmettre un couple de rotation côté entraînement, de telle sorte qu'une force dirigée sensiblement radialement établit la coopération de forces entre les éléments d'accouplement (5, 6) et la surface d'entraînement (40), de sorte que les surfaces d'appui (51, 51' ; 61, 61') des éléments d'accouplement (5 ; 6) s'appuient en coopération de forces contre la surface d'entraînement (40) de l'élément mené (4) pour transmettre un couple de rotation côté entraînement.

8. Dispositif d'entraînement à fonctionnement dans les deux sens selon la revendication 7, **caractérisé en ce que** des griffes de libération (81, 82) d'un élément de libération (8) sont agencées dans des évidements (54, 64) des surfaces en forme de cercle partiel, opposées à la surface d'entraînement (40), des éléments d'accouplement (5 ; 6), élément de librération qui comprend une patte élastique (80) accouplée à un ressort de rappel (9), et **en ce que** les griffes de libération (81, 82) se pressent en direction périphérique contre des surfaces de butée (55, 55' ; 65, 65') des évidements (54, 64) des éléments d'accouplement (5 ; 6) et retirent les éléments d'accouplement (5 ; 6) en direction périphérique jusqu'à ce que le levier d'entraînement (1) ait atteint sa position zéro.

9. Dispositif d'entraînement à fonctionnement dans les deux sens selon la revendication 8, **caractérisé en ce que** le ressort de rappel (9) est réalisé sous forme de ressort hélicoïdal comportant deux extrémités libres qui s'appuient contre une butée de boîtier (10) et contre la patte élastique (80) de l'élément de libération (8).

10. Dispositif d'entraînement à fonctionnement dans les deux sens selon l'une au moins des revendications précédentes, **caractérisé en ce que** l'élément mené (4) est relié du côté mené à un accouplement de blocage (11) qui bloque d'une part en coopération de forces un couple de rotation appliqué depuis le côté mené de l'accouplement de blocage (11), et transmet d'autre part vers le côté mené un couple de rotation transmis de l'élément mené (4) vers l'accouplement de blocage (11).

11. Dispositif d'entraînement à fonctionnement dans les deux sens selon la revendication 10, **caractérisé en ce que** l'accouplement de blocage (11) comprend un boîtier d'accouplement (12) comportant une surface de freinage cylindrique et des mâchoires de freinage (50 ; 60) agencées dans celui-ci, qui s'appuient par une partie de leurs surfaces extérieures (501 ; 601) sous précontrainte élastique contre la surface de freinage cylindrique du boîtier d'accouplement (12), **en ce que** l'élément mené (4) est relié à une roue d'entraînement comportant des griffes d'entraînement (41, 42) réalisées de préférence sous forme d'enveloppe cylindrique, qui sont agencées avec jeu angulaire en coopération de formes entre deux surfaces de butée sensiblement radiales (502 ; 602) des mâchoires de freinage (50 ; 60), et **en ce que** le côté mené (3, 30) de l'accouplement de blocage (11) comprend une ailette menée (3) agencée entre les flancs d'écartement (503 ; 603) tournés l'un vers l'autre des mâchoires de freinage (50 ; 60).

12. Dispositif d'entraînement à fonctionnement dans les deux sens selon la revendication 11, **caractérisé en ce que** les éléments d'accouplement (5 ; 6) et les mâchoires de freinage (50 ; 60) sont réalisés avec une forme identique.
